# EUROPEAN PATENT SPECIFICATION

(11) **EP 3 656 707 B1**
(45) Date of publication and mention of the grant of the patent: **15.03.2023**
(21) Application number: 18208124.0
(22) Date of filing: 23.11.2018
(51) Int. Cl.: B65G 47/08, B65G 47/26, B65G 54/02

(54) **HANDLING OF CONTAINERS IN A SYSTEM FOR PRODUCTION OF PACKAGED FOOD PRODUCTS**
HANDHABUNG VON BEHÄLTERN IN EINEM SYSTEM ZUR HERSTELLUNG VON VERPACKTEN LEBENSMITTELPRODUKTEN
GESTION DE RÉCIPIENTS DANS UN SYSTÈME POUR LA PRODUCTION DE PRODUITS ALIMENTAIRES CONDITIONNÉS

(43) Date of publication of application: 27.05.2020
(73) Proprietor: Tetra Laval Holdings & Finance S.A., 1009 Pully (CH)
(72) Inventor: BORGHI, Davide, 41121 Modena (IT); FLORE, Stefano, 40133 Bologna (IT); SACCHETTI, Elena, 42015 Correggio (IT); ROSSI, Stefano, IT-42123 Reggio Emilia (IT)
(74) Representative: Tetra Pak - Patent Attorneys SE

(56) References cited:
- WO-A1-00/51921
- DE-A1-102014 117 150
- DE-A1-102014 119 351
- DE-A1-102016 109 435
- DE-A1-102016 122 462
- DE-C1- 19 817 255
- JP-A- S5 257 675
- JP-U- S5 122 278
- JP-U- S63 164 077

## Description

### Technical Field

The invention generally relates to systems or plants for production of packaged food products.

### Background Art

The ever-growing demand of packaged food products causes a need for food producers to make more frequent changes in their production. Such changes include changing the production flow between different machines in a plant for production of packaged food products. With the packaging lines traditionally being used, such changes may be both expensive and time consuming to implement since they generally involve manual reconfiguration of the mechanical structure of machines and conveyors within the production plant.

Thus, there is a general need to facilitate changes in the production flow within plants for production of packaged food products.

It is also a general need to simplify the mechanical structure of machines and conveyors within the production plant.

Further background art can be found in DE 10 2014 117150 A1 disclosing an apparatus according to the preamble of claim 1 and a method according to the preamble of claim 11, and disclosing a
linear transport system having a carriage guide rail having a first and a second carriage, which are arranged in such a way that they can be moved independently of one another on the carriage guide.

### Summary

It is an object of the invention to at least partly overcome one or more limitations of the prior art.

One such object is to provide a technique that makes handling of containers simpler and more flexible within a system for production of packaged food products.

One or more of these objects, as well as further objects that may appear from the description below, may be at least partly achieved by an apparatus for transporting containers, a method for transporting containers, and a computer-readable medium according to the independent claims, embodiments thereof being defined by the dependent claims.

A first aspect of the invention is an apparatus for transporting containers in a system for production of packaged food products. The apparatus comprises a transportation track, and a plurality of carriers for arrangement on the transportation track, the respective carrier comprising a support surface which is configured to carry one or more of the containers. The transportation track comprises a first magnetic arrangement, and the respective carrier comprises a second magnetic arrangement. The apparatus further comprises a control device which is configured to operate one of the first and second magnetic arrangements generate a movement of the respective carrier on the transportation track. The control device is further configured to intermittently tilt the support surface of the respective carrier to slide the one or more containers along the support surface towards an end of the support surface.

The control device is configured to intermittently tilt the support surface to slide the one or more containers along the support surface onto a stopper located on or at the support surface.

In one embodiment, the support surface is configured to carry a pair of mutually spaced containers during the movement of the respective carrier on the transportation track, and the control device is configured to intermittently tilt the support surface to slide the mutually spaced containers into contact with each other.

In one embodiment, the control device is configured to tilt the support surfaces of two adjacent carriers on the transportation track in unison and with the support surfaces held level.

In one embodiment, the control device is configured to intermittently tilt the support surface at a station for arranging a plurality of the containers in a secondary packaging.

In one embodiment, the control device is configured to intermittently tilt the support surface in at least one of a feed direction and a lateral direction perpendicular to the feed direction.

In one embodiment, the control device is configured to operate at least one of the first and second magnetic arrangements to tilt the respective carrier.

In one embodiment, the respective carrier comprises a moveable platform that defines at least part of the support surface and a platform actuator for moving the platform in relation to the carrier, wherein the control device is configured to operate the platform actuator to tilt the support surface.

In one embodiment, the carrier comprises a gripping mechanism for engaging the one or more containers on the support surface, and wherein the control device is configured to intermittently deactivate the gripping mechanism to release the container when the support surface is tilted.

In one embodiment, the first magnetic arrangement comprises an array of coils, and the second magnetic arrangement comprises an array of magnets.

In one embodiment, the control device is further configured to operate at least one of the first and second magnetic arrangements to levitate the respective carrier over the transportation track during the movement on the transportation track.

A second aspect of the invention is a method according to claim 11.

Any one of the embodiments of the first aspect may be adapted and implemented as an embodiment of the second aspect.

A third aspect of the invention is a computer-readable medium according to claim 12.

Still other objectives, as well as features, aspects and advantages of the invention will appear from the following detailed description as well as from the drawings.

### Brief Description of the Drawings

Embodiments of the invention will now be described, by way of example, with reference to the accompanying schematic drawings.
FIG. 1 a perspective view of an example plant for production of packaged food products.
FIG. 2A is an elevated side view of an apparatus for transportation of containers during production of packaged food products, and FIG. 2B is a perspective view of a carrier in the apparatus of FIG. 2A.
FIGS 3A-3F are elevated side views of embodiments of the carrier in FIG. 2B for enabling change of elevation, rotation and tilting of a container.
FIGS 4A-4D are elevated side views of gripping mechanisms for holding a container on a carrier.
FIGS 5A-5D illustrate, in elevated side view, a sequence of operations for one-dimensional grouping of containers.
FIGS 6A-6B illustrate, in elevated side view, an alternative sequence of operations for one-dimensional grouping of containers.
FIG. 7 illustrates, in top plan view, a sequence of operations for two-dimensional grouping of containers.
FIG. 8 is an elevated side view of a carrier with integrated stopper.
FIG. 9 is a flow chart of a container handling method in accordance with an embodiment.
FIG. 10 illustrates, in top plan view, an embodiment for grouping of carriers.
FIG. 11 illustrates in top plan view, an embodiment for diverting a feed of containers onto separate conveyors.
FIG. 12 illustrates, in perspective view, an embodiment for orienting a container.

### Detailed Description

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments of the invention. As used herein, the term "and/or" comprises any and all combinations of one or more of the associated listed items. As used herein, the term "food product" comprises any substance that can be used or prepared for use as food by humans or animals. Such food products include, without limitation, beverages, dairy products, sauces, oils, creams, custards, soups, purées, broths, vegetables, desserts, mayonnaise, wine, pet food, whey powder, etc.

Like reference signs refer to like elements throughout.

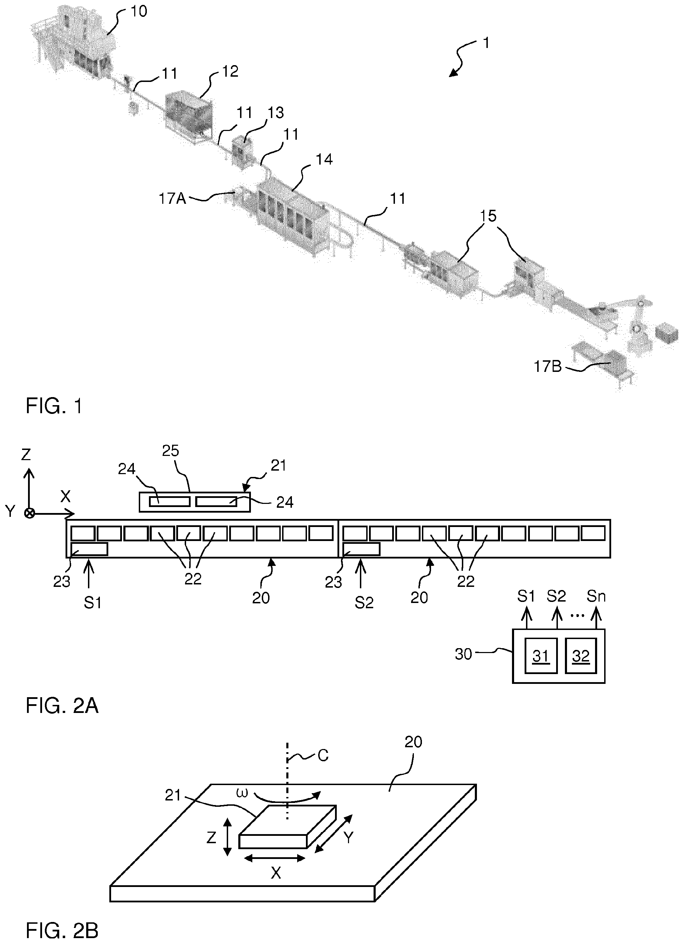

FIG. 1 is a schematic overview of an exemplifying production plant or system 1 which is configured to produce packaged food products. The food products are packaged in sealed containers or packages, which may be at least partly made of a paperboard material or a plastic material. For example, the container may be a carton or a bottle, which are well-known in the art. In the illustrated example, the system 1 comprises a sequence of machines 10, 12, 13, 14 and 15 connected by conveyors 11 for transporting packages from one machine to the next. A filling machine 10 is configured to fill a food product into containers and seal the container. An accumulator machine 12 is configured to, if necessary, accumulate packages produced by the filling machine 10. A straw application machine 13 is configured to attach a straw to the respective container. A wrapping machine 14 is configured to arrange the containers in groups and enclose each group of containers in wrapping material, e.g. stretch foil or shrink foil, to produce a wrapped container group 17A. A cardboard packing machine 15 is configured to arrange groups of containers in cardboard trays or cardboard cartons 17B and optionally also apply a wrapping material. The wrapping material, cardboard trays and cardboard cartons are commonly denoted "secondary packaging" in the art.

Embodiments of the present invention start out from the insight that it would be advantageous to at least partly transport the containers within the system 1 by use of magnetically suspended "planar motors". Such planar motors are known in the field of photolithography and semiconductor processing, where they are implemented to provide micrometer- or nanometer-scale positioning of wafers or the like in clean spaces where particles must be kept at a minimum. Magnetically suspended planar motors, also known as maglev motors, are operable with minimum generation of contaminating particles due to low friction. Although these motivations are not primary objectives in the field of packaged food products, the present inventors have realized, by insightful reasoning, that it is both advantageous and viable to implement such planar motors in systems for production of packaged food products. Examples of magnetically suspended planar motors for micrometer- or nanometer-scale positioning are given in US6777833, US8686602, US6208045, US6259174 and US5641054. Further examples of magnetically suspended planar motors are found in WO2006/054243, WO2009/083889, and the article *"*Electro-dynamic planar motor" by Compter et al., published in Proc. of Mechatronics 2002, University of Twente, 24-26 June 2002, pages 81-87.

The implementation of magnetically suspended planar motors in systems for production of packaged food products has the potential of reducing the need for external guides as well as mechanical bearings, which in turn leads to reduced wear and MTBF (Mean Time Between Failures). Ultimately, this results in reduced operating cost of the system. A magnetically suspended planar motor is effectively a direct drive mechanism, which enables dynamic control of position, velocity, acceleration and orientation (attitude) of a container or an array of containers. By proper implementation in the system, these properties may result in increased flexibility of production, e.g. with respect to changes in the format of the containers or changes in the required pattern of containers, e.g. for secondary packaging.

FIG. 2A illustrates an embodiment of a magnetically suspended planar motor for use in the system of FIG. 1. The planar motor comprises a stationary (fixed) base element 20 with a planar top surface, and a moveable carrier 21 which is arranged to overlie the base element 20. As indicated in FIG. 2A, identical base elements 20 may be tiled in an X dimension, and possibly in a Y dimension (not shown), to define an extended transportation surface. The transportation surface may form a transportation track in the system 1, e.g. to replace at least part of one or more of the conveyors 11 in FIG. 1 or to transport containers within any one of the machines 10, 12, 13, 14 and 15 in FIG. 1. FIG. 2A includes an orthogonal XYZ coordinate system, in which the X dimension is parallel to the feed direction of such a transportation track, the Y dimension is a lateral dimension (orthogonal to the X dimension on the top surface of the base element 20), and the Z dimension is a levitation dimension (perpendicular to the top surface of the base element 20). As indicated schematically in FIG. 2A, the top surface of the carrier 21 defines a support surface 25 for carrying one or more containers in the system 1.

The respective base element 20 comprises a first magnetic arrangement, and the carrier 21 comprises a second magnetic arrangement. One of the magnetic arrangements is "active" and operable, when energized, to selectively generate a magnetic field that interacts with the other magnetic arrangement, which is passive, to move or propel the carrier 21 in relation to the base element 20, at least in the X dimension, and preferably also in the Y dimension. In one embodiment, the magnetic field is generated by selectively applying commutation currents to an array of coils in the active magnetic arrangement. The active magnetic arrangement may be installed in either of the base element 20 and the carrier 21. In a currently preferred embodiment, the active magnetic arrangement is located in base element 20, to obviate the need to supply control signals and power signals to the moving carrier 21.

Consequently, in the example of FIG. 2A as well as the following examples, the first magnetic arrangement in the base element 20 is active and comprises an array of coils 22 and associated circuitry 23 for providing and/or generating commutation currents for the coils 22. The second magnetic arrangement in the carrier 21 comprises an array of magnets 24 and thus passive. A control device 30 is configured to generate control signals S1-Sn for the base elements 20 to control the movement of the carrier 21 on the base elements 20. The control signals S1-Sn may comprise the above-mentioned commutation signals for the coils 22 in the respective base element 21. Alternatively, if the circuitry 23 is configured to generate the commutation signals, the control device 30 may supply power to the respective base element 20 in addition to the control signals S1-Sn, which may designate a desired position or trajectory of the carrier 21 on the respective base element 20. As indicated in FIG. 2A, the control device 30 may operate the planar motor to levitate the carrier 21, by causing the coils 22 to generate a magnetic field that arranges the carrier 21 with a small spacing or gap between the bottom surface of the carrier 21 and the top surface of the respective base element 20.

The control device 30 may be further configured to generate control signals (not shown) for controlling and synchronizing operation of the system 1.

In the illustrated embodiment, the control device 30 comprises a processor 31 and computer memory 32. The processor 30 may e.g. include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program comprising computer instructions is stored in the memory 32 and executed by the processor 31 to generate the control signals S1 for the planar motor. The control program may be supplied to the control device 30 on a computer-readable medium, which may be a tangible (non-transitory) product (e.g. magnetic medium, optical disk, read-only memory, flash memory, etc) or a propagating signal.

FIG. 2B illustrates an embodiment of the planar motor, in which the carrier 21 is independently controllable for movement in four degrees of freedom (DOF), specifically the X dimension, the Y dimension, the Z dimension and for rotation ω around an axis C which is perpendicular to the support surface 25 of the carrier 21. The rotation axis C may, but need not, be located at the geometric center of carrier 21.

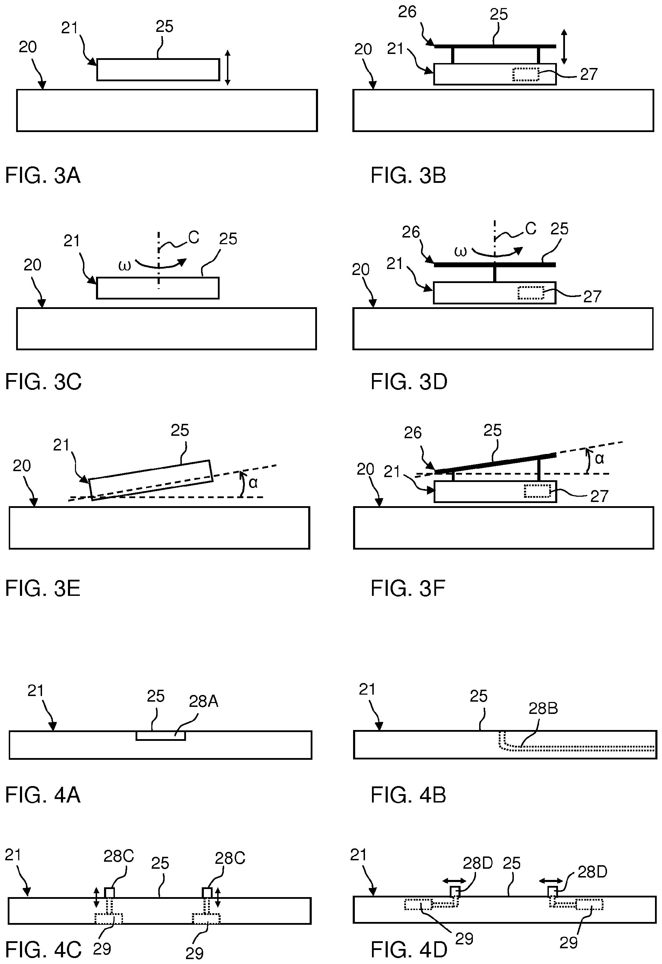

FIG. 3A illustrates an embodiment of a planar motor, in which a change in the levitation of the carrier 21, in the Z dimension, may be effected by modifying the magnetic field generated by the first magnetic arrangement in the base element 20. Thereby, the support surface 25 may be controllably moved away from and towards the base element 21.

FIG. 3B illustrates an embodiment, in which a moveable platform 26 is installed in the carrier 21 to define at least part of the support surface 25. A platform actuator 27 is arranged in the carrier 21 to translate the platform 27 away from and towards the carrier 21. This embodiment may relax the requirements on the first and/or second magnetic arrangements. The actuator 27 may be any form of motor, e.g. electric, pneumatic, or hydraulic, which may be controlled by a control signal generated by the control device 30 and transmitted by wire or wirelessly to the carrier 21. In an alternative, the actuator 27 may be controlled by the magnetic field generated by the first magnetic arrangement in the base element 20. In a further alternative, the actuator is omitted and the movement of the platform 26 is controlled by the magnetic field generated by the first magnetic arrangement in the base element 20.

FIG. 3C illustrates an embodiment of a planar motor, in which the rotation ω of the carrier 21 around the axis C may be effected by modifying the magnetic field generated by the first magnetic arrangement in the base element 20. Thereby, the support surface 25 may be controllably rotated with respect to an arbitrary reference direction in the XY plane.

FIG. 3D illustrates an embodiment, in which a rotatable platform 26 is installed in the carrier 21 to define at least part of the support surface 25. Controlled rotation of the platform 26 may be effected in analogy with the embodiment in FIG. 3B, e.g. by actuator 27.

FIG. 3E illustrates an embodiment of a planar motor, in which a change in tilt angle α of the carrier 21, e.g. in the X dimension or the Y dimension, may be effected by modifying the magnetic field generated by the first magnetic arrangement in the base element 20. Thereby, the support surface 25 may be controllably tilted from a horizontal plane.

FIG. 3F illustrates an embodiment, in which a moveable platform 26 is installed in the carrier 21 to define at least part of the support surface 25. The moveable platform 26 is arranged for tilting in at least one direction. Controlled tilting of the platform 26 may be effected in analogy with the embodiment in FIG. 3B, e.g. by actuator 27.

It should be understood that two or more of the embodiments in FIGS 3A-3F may be combined to provide any desirable number of DOF. For example, the planar motor as described herein may exhibit up to 6 independent DOF, including movement in the X, Y and Z dimensions, rotation around the axis C (also known as "yaw"), tilting in the X dimension (also known as "pitch") and tilting in the Y dimension (also known as "roll").

FIGS 4A-4D show examples of gripping mechanisms for holding one or more containers (not shown) onto the support surface 25. In FIG. 4A, the gripping mechanism comprises one or more electromagnets 28A for generating a magnetic field to attract the bottom surface of the respective container which, in this example, comprises a ferromagnetic material. In FIG. 4B, the gripping mechanism comprises a conduit 28B that opens into the support surface 25 and is connected to a source (not shown) for generating a sub-atmospheric pressure. In FIG. 4C, the gripping mechanism comprises one or more projection elements 28C (two shown), which are moveable in a direction perpendicular to the support surface 25 between a retraced state in which the respective projection element 28C is located level with or beneath the support surface 25, and a projecting state in which the respective projection element 28C projects from the support surface 25 to define a containment region that mates with one or more containers. In FIG. 4D, the gripping mechanism comprises projection elements 28D (two shown), which are moveable in a direction parallel to the support surface 25 to be pressed against one or more containers on the support surface 25. In one example, the projection elements 28D may be arranged and configured similar to jaws of a mechanical chuck. As indicated in FIGS 4C and 4D, one or more actuators 29 (two shown) may be arranged in the carrier 21 to move the projection elements 28C, 28D. The actuator(s) 29 may be any form of motor, e.g. electric, pneumatic, or hydraulic. The gripping mechanisms in FIGS 4A-4D are "active", in the sense that they may be selectively operated to switch between engaging and releasing the container(s) on the support surface 25, e.g. based on a control signal from the control device 30 (FIG. 1).

In an alternative, the respective carrier 21 comprises a passive gripping mechanism, e.g. one or more fixed projections (cf. FIG. 4C), one or more permanent magnets (cf. FIG. 4A), or a high friction surface structure. It is also conceivable that the gripping mechanism is omitted.

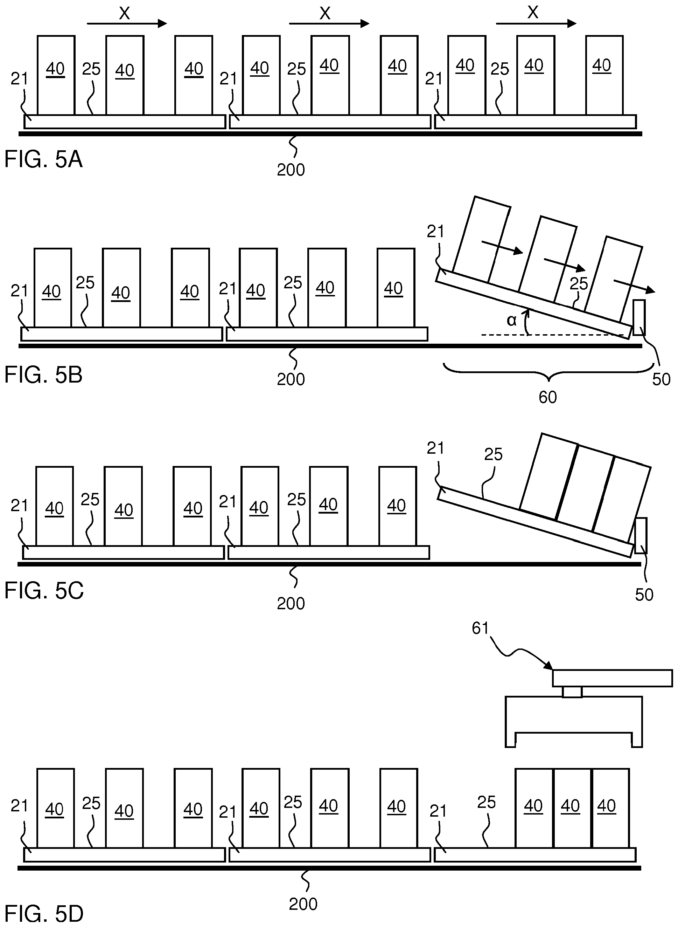

The inventors have realized that the tilting function as exemplified in FIGS 3C-3D may provide distinct advantages when used in a system for production of packaged food products. Related embodiments will be described with reference to FIGS 5-9.

FIGS 5A-5D illustrate a sequence of operations performed for grouping containers 40, e.g. in preparation for secondary packaging. The grouping serves to reduce or minimize the distance between the containers 40. With reference to FIG. 1, the operations in FIGS 5A-5D may be performed in the wrapping machine 14 or the cardboard packing machine 15. The containers 40 are transported on a stationary transportation track 200 which comprises a tiled pattern of base elements (20 in FIG. 2A). The first magnetic arrangements of the tiled base elements may be seen to collectively form a first magnetic arrangement of the transportation track 200, which is connected to receive the control signals S1-Sn from the control device (30 in FIG. 2A). In FIG. 5A, a trail of carriers 21 are propelled in the feed direction X along the track 200, and an upstream machine (e.g. the filling machine 10 in FIG. 1) has placed three containers 40 on each carrier 21 with a mutual spacing. In FIG. 5B, when a leading carrier 21 arrives at a station 60 for secondary packaging, the trail of carriers 21 is intermittently stopped and the leading carrier 21 is tilted in the feed direction X. The tiling angle α (pitch angle) is set so that the containers 40, by action of gravity, overcome the friction on the support surface 25 and slide towards the front end of the carrier 21 onto a stopper 50. As shown in FIG. 5C, the carrier 21 may remain tilted until the containers 40 has slid into engagement with each other and form a compacted or condensed group of containers. If the carrier 21 comprises an active gripping mechanism (cf. FIGS 4A-4D), this mechanism is operated to release the containers 40 on the carrier 21 before or while the carrier 21 is tilted. In FIG. 5D, the leading carrier 21 is returned to a horizontal position and the condensed group is processed for secondary packaging, in the illustrated example by being lifted by a gripper 61.

The grouping of containers by tilting may replace conventional grouping devices which are structurally complicated, add cost, require maintenance, and take up space in the system 1, e.g. at the station 60 for secondary packaging. Further, the tilting may be performed anywhere along the track 200, giving flexibility to the system and reducing the need for structural modifications.

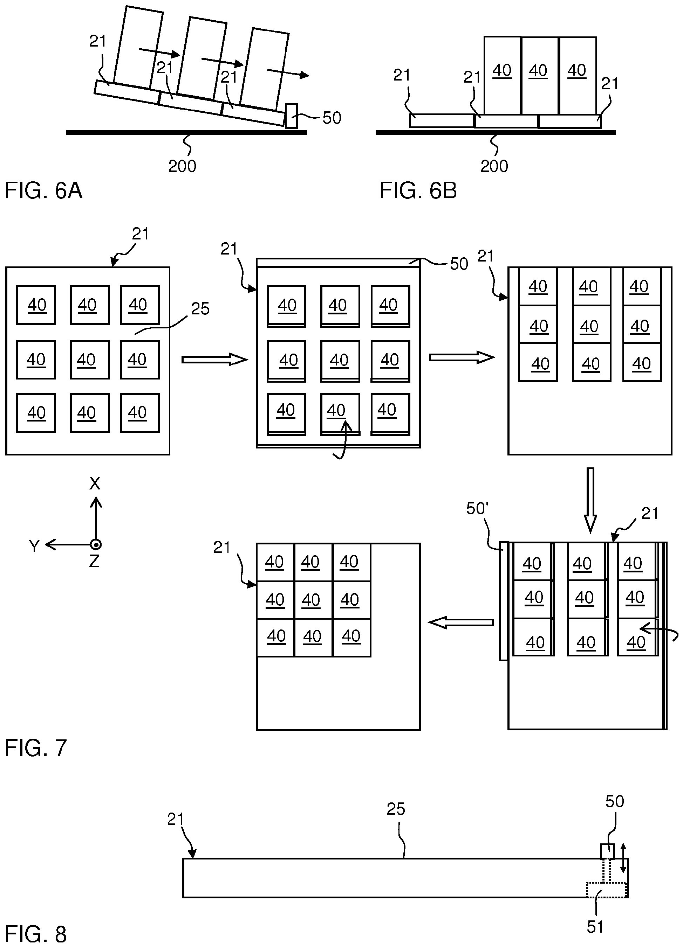

FIGS 6A-6B illustrate a variant, in which the supporting surfaces 25 of a sequence of consecutive carriers 21 are tilted in unison to define a composite planar surface, so that the containers 40 on the tilted supporting surface are allowed to slide towards the front end of the leading carrier 21 and onto the stopper 50. This grouping is achieved irrespective of the number of containers on the respective carrier 21. As shown, grouping is possible even if each carrier 21 carries a single container 40.

The grouping by tilting is not limited to one-dimensional grouping as shown in FIGS 5-6. FIG. 7 illustrates a two-dimensional pattern of spaced-apart containers 40 on a carrier 21. A first tilting causes the support surface 25 to be tilted in the feed dimension X so as to slide the containers 40 onto a first stopper 50, thereby forming spaced rows of abutting containers 40. After returning the support surface 25 to horizontal, a second tilting causes the support surface 25 to be tilted in the lateral dimension Y so as to slide the containers 40 onto a second stopper 50', thereby transforming the two-dimensional pattern of containers 40 into a condensed group.

It is also to be realized that one-dimensional grouping may be performed by tilting the supporting surface 25 in the lateral dimension Y, by analogy with the second tilting in FIG. 7.

The stopper 50 may be separate from the carrier 21, as shown in FIGS 5-6. For example, the stopper may be an arm that is swung or translated into position whenever a tilting operation is to be performed for grouping. Alternatively, as exemplified in FIG. 8, the stopper 50 is integrated into the carrier 21. The stopper 50 may be moveable in a direction perpendicular to the support surface 25 between a retraced state in which the stopper 50 is located level with or beneath the support surface 25, and a projecting state in which the stopper 50 projects from the support surface 25. An actuator 51 may be arranged in the carrier 21 to move the stopper 50. By analogy with FIG. 4C, the actuator 51 may set the stopper 50 in the projecting state based on a control signal from the control device 30, during or before the tilting of the support surface.

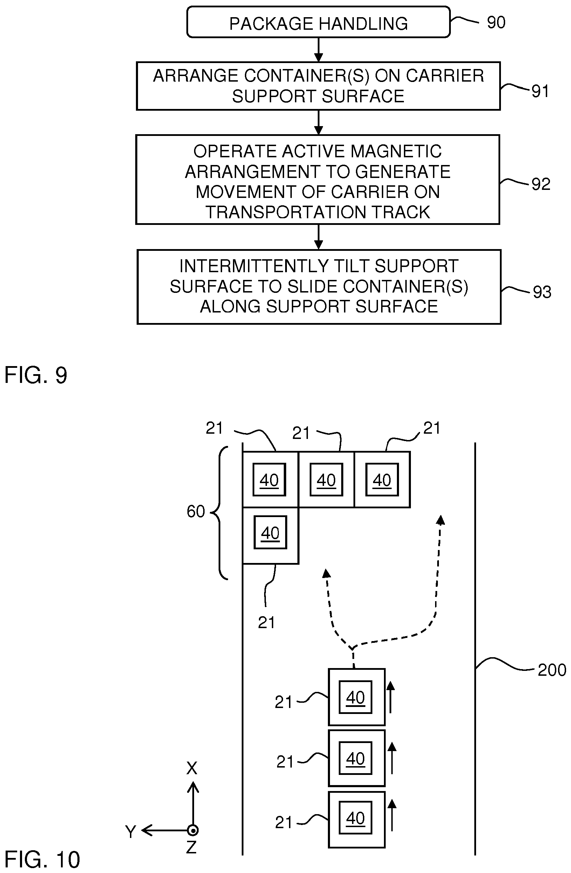

The sequence of events described above with reference to FIGS 5-7 may correspond to a handling method 90 shown in FIG. 9. In step 91, one or more containers 40 are arranged on the support surface 25 of a carrier 21, which is located on the track 200. The container(s) 40 may or may not be filled with the food product at this stage. In step 92, the active magnetic arrangement (in the track 200 or the carrier 21, depending on implementation) is operated to generate movement of the carrier 21 in the feed direction X along the track 200. In step 93, the support surface 25 is intermittently tilted (by tilting the carrier 21 and/or the platform 26, depending on implementation) to slide the one or more containers 40 along the support surface 25. The method 90 may be executed based on control signals from the control device 30 in FIG. 2A.

The tilting of the support surface 25 may not only be used to form a condensed group of containers 40, but may also be used for unloading the condensed group from the carrier 21 onto a receiving surface, e.g. a conventional conveyor or a table for pickup by a robot (cf. FIG. 1). For example, in FIG. 5C and assuming that the receiving surface is located to the right of track 200, the stopper 50 may be removed, to thereby allow the group of containers 40 to slide onto the receiving surface. In another variant, the stopper 50 is omitted and grouping and unloading is performed jointly as the containers 40 are slid along the tilted support surface 25 onto the receiving surface.

The planar motor as described in the foregoing and implemented for transportation of containers enables additional improvements in the context of production of packaged food products.

By proper configuration of the first and second magnetic arrangements in the track 200 and the carrier 21, the respective carrier 21 is operable for movement in the XY plane. Thus, by simply modifying the control program of the control device 30, and without the need for structural modifications, the carriers 21 may be moved in any direction on the track 200 and be arranged in any desirable pattern on the track 200, subject to the geometric limitations of the track 200.

FIG. 10 illustrates an embodiment, in which the track 200 has a width in the lateral dimension Y that allows two or more carriers 21 to be arranged side by side in the lateral dimension Y. As shown, this enables grouping of carriers 21, and thus containers 40, in both the X dimension and the Y dimension. The grouping may be changed dynamically and adapted to the current production requirements. For example, as indicated in FIG. 10, the grouping may performed at a station 60 for secondary packaging. It is realized that a compact arrangement of containers 40 is attained at the station 60 if there is a single container 40 on each carrier 21 and if the footprints of the container 40 and the carrier 21 are substantially similar or matching.

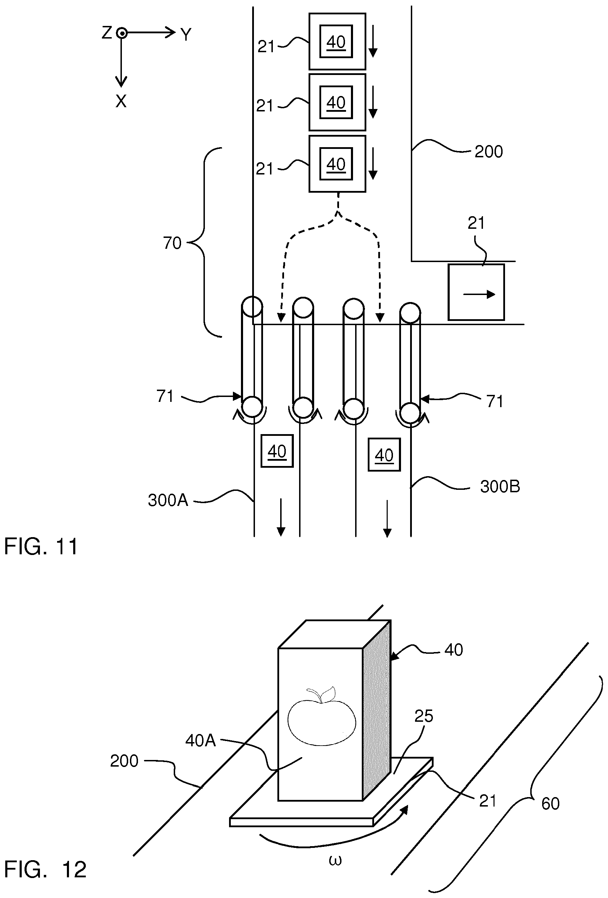

FIG. 11 illustrates another use of XY motion control. A feed of carriers 21, each carrying any number of containers 40, is selectively diverted at a diversion location 70 onto either a first conveyor 300A or a second conveyor 300B. In the illustrated example, conventional belt drives 71 are arranged at the respective interface between the track 200 and the conveyor 300A, 300B to lift the container(s) 40 from the carrier 21 onto the conveyor 300A, 300B. As shown, the track 200 may extend at right angles from the diversion location 70, to allow the empty carriers 21 to be moved away for subsequent use in transporting containers 40 in the system.

FIGS 10-11 may be seen to exemplify an apparatus for transporting containers 40 in a system for production of packaged food products, the apparatus comprising: a transportation track 200, and a plurality of carriers 21 for arrangement on the transportation track 200, the respective carrier 21 comprising a support surface 25 which is configured to carry one or more of the containers 40, wherein the transportation track 200 comprises a first magnetic arrangement, and the carrier 21 comprises a second magnetic arrangement, said apparatus further comprising a control device 30 which is configured to operate one of the first and second magnetic arrangements to generate a movement of the respective carrier 21 in each of a feed dimension X and a lateral dimension Y on the transportation track 200. In the embodiment of FIG. 10, the control device 30 is configured to move a predefined set of carriers 40 on the transportation track 200 to form a desired pattern in the feed dimension X and/or lateral dimension Y, e.g. a grouped pattern in which the carriers 21 are arranged side by side. In the embodiment of FIG. 11, the control device 30 is configured to selectively divert the respective carrier 21 from the transportation track 200, by moving the respective carrier 21 in both the feed dimension X and the lateral dimension Y, to a conveyor 300A, 300B so as to unload of the one or more containers 40 from the respective carrier 21 onto the conveyor 300A, 300B.

By proper configuration of the first and second magnetic arrangements in the track 200 and the carrier 21, and/or by provision of a platform 26 as exemplified in FIG. 3D, the support surface 25 is operable for controlled rotation (yaw) in the XY plane on the transportation track 200. Thus, by simply modifying the control program of the control device 30, and without the need for structural modifications, the rotation of the containers 40 may be changed dynamically and adapted to the current production requirements. For example, as indicated in FIG. 12, a rotation ω may performed at a station 60 for secondary packaging, e.g. to orient the container 40 with its front surface 40A in a specific direction.

FIG. 12 may be seen to exemplify an apparatus for transporting containers 40 in a system for production of packaged food products, the apparatus comprising: a transportation track 200, and a plurality of carriers 21 for arrangement on the transportation track 200, the respective carrier 21 comprising a support surface 25 which is configured to carry one or more of the containers 40, wherein the transportation track 200 comprises a first magnetic arrangement, and the carrier 21 comprises a second magnetic arrangement, said apparatus further comprising a control device 30 which is configured to operate one of the first and second magnetic arrangements to generate a movement of the respective carrier 21 in at least a feed direction X on the transportation track 200.The control device 30 is further configured to rotate the support surface 25 of the respective carrier 21 around an axis C which is perpendicular to the support surface 25 of the carrier 21, e.g. to orient the one or more containers 40 on the support surface 25 in a predefined direction.

## Claims

1. An apparatus for transporting containers (40) in a system for production of packaged food products, said apparatus comprising:
a transportation track (200), and
a plurality of carriers (21) for arrangement on the transportation track (200), the respective carrier (21) comprising a support surface (25) which is configured to carry one or more of the containers (40),
wherein the transportation track (200) comprises a first magnetic arrangement (22, 23), and the respective carrier (21) comprises a second magnetic arrangement (24),
said apparatus further comprising a control device (30) which is configured to operate one of the first and second magnetic arrangements (22, 23; 24) generate a movement of the respective carrier (21) on the transportation track (200),
wherein the control device (30) is further configured to intermittently tilt the support surface (25) of the respective carrier (21) to slide the one or more containers (40) along the support surface (25) towards an end of the support surface (25) **characterized in that** the control device (30) is configured to intermittently tilt the support surface (25) to slide the one or more containers (40) along the support surface (25) onto a stopper (50) located on or at the support surface (25).

2. The apparatus of claim 1, wherein the support surface (25) is configured to carry a pair of mutually spaced containers (40) during the movement of the respective carrier (21) on the transportation track (200), and wherein the control device (30) is configured to intermittently tilt the support surface (25) to slide the mutually spaced containers (40) into contact with each other.

3. The apparatus of any preceding claim, wherein the control device (30) is configured to tilt the support surfaces (25) of two adjacent carriers (21) on the transportation track (200) in unison and with the support surfaces (25) held level.

4. The apparatus of any preceding claim, wherein the control device (30) is configured to intermittently tilt the support surface (25) at a station (60) for arranging a plurality of the containers (40) in a secondary packaging.

5. The apparatus of any preceding claim, wherein the control device (30) is configured to intermittently tilt the support surface (25) in at least one of a feed direction (X) and a lateral direction (Y) perpendicular to the feed direction (X).

6. The apparatus of any preceding claim, wherein the control device (30) is configured to operate at least one of the first and second magnetic arrangements (22, 23; 24) to tilt the respective carrier (21).

7. The apparatus of any preceding claim, wherein the respective carrier (21) comprises a moveable platform (26) that defines at least part of the support surface (25) and a platform actuator (27) for moving the platform (26) in relation to the carrier (21), wherein the control device (30) is configured to operate the platform actuator (27) to tilt the support surface (25).

8. The apparatus of any preceding claim, wherein the carrier (21) comprises a gripping mechanism (28A; 28B; 28C; 28D) for engaging the one or more containers (40) on the support surface (25), and wherein the control device (30) is configured to intermittently deactivate the gripping mechanism (28A; 28B; 28C; 28D) to release the container (40) when the support surface (25) is tilted.

9. The apparatus of any preceding claim, wherein the first magnetic arrangement (22, 23) comprises an array of coils (22), and the second magnetic arrangement comprises an array of magnets (24).

10. The apparatus of any preceding claim, wherein the control device (30) is further configured to operate at least one of the first and second magnetic arrangements (22, 23; 24) to levitate the respective carrier (21) over the transportation track (200) during the movement on the transportation track (200).

11. A method of transporting containers (40) in a system for production of packaged food products, said method comprising:
arranging (91) one or more of the containers (40) on a support surface (25) of a respective carrier (21) on a transportation track (200),
operating (92) one of a first magnetic arrangement (22, 23) in the transportation track (200) and a second magnetic arrangement (24) in the respective carrier (21) to move the respective carrier (21) on the transportation track (200),
intermittently tilting (93) the support surface (25) to slide the one or more containers (40) along the support surface (25) towards an end of the support surface (25), **characterized in that** the method comprises:
intermittently tilting the support surface (25) to slide the one or more containers along the support surface (25) onto a stopper (50) located on or at the support surface (25).

12. A computer readable medium comprising computer instructions which, when executed by the processing device (31) of the controller (30) of claim 1, causes the device of claim 1 to execute the steps of the method of claim 11.

## Patentansprüche

1. Einrichtung zum Transportieren von Behältern (40) in einem System zur Herstellung von verpackten Lebensmittelprodukten, wobei die Einrichtung Folgendes umfasst:
eine Transportschiene (200), und
eine Mehrzahl von Trägern (21) zur Anordnung auf der Transportschiene (200), wobei der jeweilige Träger (21) eine Stützfläche (25) umfasst, die dazu ausgelegt ist, einen oder mehrere der Behälter (40) zu tragen,
wobei die Transportschiene (200) eine erste Magnetanordnung (22, 23) umfasst und der jeweilige Träger (21) eine zweite Magnetanordnung (24) umfasst,
wobei die Einrichtung ferner eine Steuervorrichtung (30) umfasst, die dazu ausgelegt ist, eine der ersten und zweiten Magnetanordnungen (22, 23; 24) zu betätigen, um eine Bewegung des jeweiligen Trägers (21) auf der Transportschiene (200) zu erzeugen,
wobei die Steuervorrichtung (30) ferner dazu ausgelegt ist, die Stützfläche (25) des jeweiligen Trägers (21) in Intervallen zu neigen, um den einen oder die mehreren Behälter (40) entlang der Stützfläche (25) hin zu einem Ende der Stützfläche (25) gleiten zu lassen, **dadurch gekennzeichnet, dass** die Steuervorrichtung (30) dazu ausgelegt ist, die Stützfläche (25) in Intervallen zu neigen, um den einen oder die mehreren Behälter (40) entlang der Stützfläche (25) auf einen Anschlag (50) gleiten zu lassen, der sich auf oder an der Stützfläche (25) befindet.

2. Einrichtung nach Anspruch 1, wobei die Stützfläche (25) dazu ausgelegt ist, ein Paar von voneinander beabstandeten Behältern (40) während der Bewegung des jeweiligen Trägers (21) auf der Transportschiene (200) zu tragen, und wobei die Steuervorrichtung (30) dazu ausgelegt ist, die Stützfläche (25) in Intervallen zu neigen, um die voneinander beabstandeten Behälter (40) in Kontakt miteinander gleiten zu lassen.

3. Einrichtung nach einem der vorhergehenden Ansprüche, wobei die Steuervorrichtung (30) dazu ausgelegt ist, die Stützflächen (25) von zwei angrenzenden Trägern (21) auf der Transportschiene (200) gemeinsam und bei waagerecht gehaltenen Stützflächen (25) zu neigen.

4. Einrichtung nach einem der vorhergehenden Ansprüche, wobei die Steuervorrichtung (30) dazu ausgelegt ist, die Stützfläche (25) an einer Station (60) zum Anordnen einer Mehrzahl der Behälter (40) in einer zweiten Verpackung in Intervallen zu neigen.

5. Einrichtung nach einem der vorhergehenden Ansprüche, wobei die Steuervorrichtung (30) dazu ausgelegt ist, die Stützfläche (25) in mindestens einer einer Vorschubrichtung (X) und einer zu der Vorschubrichtung (X) senkrechten Querrichtung (Y) in Intervallen zu neigen.

6. Einrichtung nach einem der vorhergehenden Ansprüche, wobei die Steuervorrichtung (30) dazu ausgelegt ist, mindestens eine der ersten und zweiten Magnetanordnungen (22, 23; 24) zu betätigen, um den jeweiligen Träger (21) zu neigen.

7. Einrichtung nach einem der vorhergehenden Ansprüche, wobei der jeweilige Träger (21) eine bewegliche Plattform (26), die zumindest einen Teil der Stützfläche (25) definiert, und einen Plattformaktuator (27) zum Bewegen der Plattform (26) in Relation zu dem Träger (21) umfasst, wobei die Steuervorrichtung (30) dazu ausgelegt ist, den Plattformaktuator (27) zu betätigen, um die Stützfläche (25) zu neigen.

8. Einrichtung nach einem der vorhergehenden Ansprüche, wobei der Träger (21) einen Greifmechanismus (28A; 28B; 28C; 28D) zum Ineingriffnehmen des einen oder der mehreren Behälter (40) auf der Stützfläche (25) umfasst, und wobei die Steuervorrichtung (30) dazu ausgelegt ist, den Greifmechanismus (28A; 28B; 28C; 28D) in Intervallen zu deaktivieren, um den Behälter (40) freizugeben, wenn die Stützfläche (25) geneigt ist.

9. Einrichtung nach einem der vorhergehenden Ansprüche, wobei die erste Magnetanordnung (22, 23) eine Reihe von Spulen (22) umfasst und die zweite Magnetanordnung eine Reihe von Magneten (24) umfasst.

10. Einrichtung nach einem der vorhergehenden Ansprüche, wobei die Steuervorrichtung (30) ferner dazu ausgelegt ist, mindestens eine der ersten und zweiten Magnetanordnungen (22, 23; 24) zu betätigen, um den jeweiligen Träger (21) über der Transportschiene (200) während der Bewegung auf der Transportschiene (200) schweben zu lassen.

11. Verfahren zum Transportieren von Behältern (40) in einem System zur Herstellung von verpackten Lebensmittelprodukten, wobei das Verfahren Folgendes umfasst:
Anordnen (91) eines oder mehrerer der Behälter (40) auf einer Stützfläche (25) eines jeweiligen Trägers (21) auf einer Transportschiene (200),
Betätigen (92) einer einer ersten Magnetanordnung (22, 23) in der Transportschiene (200) und einer zweiten Magnetanordnung (24) in dem jeweiligen Träger (21), um den jeweiligen Träger (21) auf der Transportschiene (200) zu bewegen,
Neigen (93) der Stützfläche (25) in Intervallen, um den einen oder die mehreren Behälter (40) entlang der Stützfläche (25) hin zu einem Ende der Stützfläche (25) gleiten zu lassen, **dadurch gekennzeichnet, dass** das Verfahren Folgendes umfasst:
Neigen der Stützfläche (25) in Intervallen, um den einen oder die mehreren Behälter entlang der Stützfläche (25) auf einen Anschlag (50) gleiten zu lassen, der sich auf oder an der Stützfläche (25) befindet.

12. Computerlesbares Medium, das Computeranweisungen umfasst, die, wenn sie durch die Verarbeitungsvorrichtung (31) der Steuerung (30) nach Anspruch 1 ausgeführt werden, die Vorrichtung nach Anspruch 1 veranlassen, die Schritte des Verfahrens nach Anspruch 11 auszuführen.

## Revendications

1. Appareil pour transporter des contenants (40) dans un système pour la production de produits alimentaires conditionnés, ledit appareil comprenant :
une voie de transport (200), et
une pluralité d'organes porteurs (21) pour l'agencement sur la voie de transport (200), l'organe porteur respectif (21) comprenant une surface de support (25) qui est configurée pour porter un ou plusieurs des contenants (40),
dans lequel la voie de transport (200) comprend un premier agencement magnétique (22, 23), et l'organe porteur respectif (21) comprend un second agencement magnétique (24),
ledit appareil comprenant en outre un dispositif de commande (30) qui est configuré pour faire fonctionner un des premier et second agencements magnétiques (22, 23 ; 24) pour générer un mouvement de l'organe porteur respectif (21) sur la voie de transport (200),
dans lequel le dispositif de commande (30) est en outre configuré pour incliner de façon intermittente la surface de support (25) de l'organe porteur respectif (21) pour faire coulisser l'un ou les plusieurs contenants (40) le long de la surface de support (25) vers une extrémité de la surface de support (25), **caractérisé en ce que** le dispositif de commande (30) est configuré pour incliner de façon intermittente la surface de support (25) pour faire coulisser l'un ou les plusieurs contenants (40) le long de la surface de support (25) pour aboutir sur une butée (50) située sur, ou au niveau de, la surface de support (25).

2. Appareil selon la revendication 1, dans lequel la surface de support (25) est configurée pour porter une paire de contenants mutuellement espacés (40) durant le mouvement de l'organe porteur respectif (21) sur la voie de transport (200), et dans lequel le dispositif de commande (30) est configuré pour incliner de façon intermittente la surface de support (25) pour faire coulisser les contenants mutuellement espacés (40) en contact l'un avec l'autre.

3. Appareil selon une quelconque revendication précédente, dans lequel le dispositif de commande (30) est configuré pour incliner les surfaces de support (25) de deux organes porteurs adjacents (21) sur la voie de transport (200) en tandem et avec les surfaces de support (25) maintenues de niveau.

4. Appareil selon une quelconque revendication précédente, dans lequel le dispositif de commande (30) est configuré pour incliner de façon intermittente la surface de support (25) à un poste (60) pour agencer une pluralité des contenants (40) dans un emballage secondaire.

5. Appareil selon une quelconque revendication précédente, dans lequel le dispositif de commande (30) est configuré pour incliner de façon intermittente la surface de support (25) dans au moins une d'une direction d'avance (X) et d'une direction latérale (Y) perpendiculaire à la direction d'avance (X).

6. Appareil selon une quelconque revendication précédente, dans lequel le dispositif de commande (30) est configuré pour faire fonctionner au moins un des premier et second agencements magnétiques (22, 23 ; 24) pour incliner l'organe porteur respectif (21).

7. Appareil selon une quelconque revendication précédente, dans lequel l'organe porteur respectif (21) comprend une plate-forme mobile (26) qui définit au moins une partie de la surface de support (25) et un actionneur de plate-forme (27) pour déplacer la plate-forme (26) par rapport à l'organe porteur (21), dans lequel le dispositif de commande (30) est configuré pour faire fonctionner l'actionneur de plate-forme (27) pour incliner la surface de support (25).

8. Appareil selon une quelconque revendication précédente, dans lequel l'organe porteur (21) comprend un mécanisme de préhension (28A ; 28B ; 28C ; 28D) pour entrer en prise avec l'un ou les plusieurs contenants (40) sur la surface de support (25), et dans lequel le dispositif de commande (30) est configuré pour désactiver de façon intermittente le mécanisme de préhension (28A ; 28B ; 28C ; 28D) pour libérer le contenant (40) lorsque la surface de support (25) est inclinée.

9. Appareil selon une quelconque revendication précédente, dans lequel le premier agencement magnétique (22, 23) comprend une série de bobines (22), et le second agencement magnétique comprend une série d'aimants (24).

10. Appareil selon une quelconque revendication précédente, dans lequel le dispositif de commande (30) est en outre configuré pour faire fonctionner au moins un des premier et second agencements magnétiques (22, 23 ; 24) pour faire léviter l'organe porteur respectif (21) par-dessus la voie de transport (200) durant le mouvement sur la voie de transport (200).

11. Procédé de transport de contenants (40) dans un système pour la production de produits alimentaires conditionnés, ledit procédé comprenant :
l'agencement (91) d'un ou de plusieurs des contenants (40) sur une surface de support (25) d'un organe porteur respectif (21) sur une voie de transport (200),
la mise en fonctionnement (92) d'un d'un premier agencement magnétique (22, 23) dans la voie de transport (200) et d'un second agencement magnétique (24) dans l'organe porteur respectif (21) pour déplacer l'organe porteur respectif (21) sur la voie de transport (200),
l'inclinaison intermittente (93) de la surface de support (25) pour faire coulisser l'un ou les plusieurs contenants (40) le long de la surface de support (25) vers une extrémité de la surface de support (25), **caractérisé en ce que** le procédé comprend :
l'inclinaison intermittente de la surface de support (25) pour faire coulisser l'un ou les plusieurs contenants le long de la surface de support (25) pour aboutir sur une butée (50) située sur, ou au niveau de, la surface de support (25).

12. Support lisible par ordinateur, comprenant des instructions d'ordinateur qui, lorsqu'elles sont exécutées par le dispositif de traitement (31) du dispositif de commande (30) de la revendication 1, font en sorte que le dispositif de la revendication 1 exécute les étapes du procédé de la revendication 11.
